# EUROPEAN PATENT SPECIFICATION

(11) **EP 3 764 800 B1**
(45) Date of publication and mention of the grant of the patent: **14.01.2026**
(21) Application number: 19721034.7
(22) Date of filing: 18.03.2019
(51) Int. Cl.: A22C 17/00

(54) **DEVICE WITH GRIPPING ARM FOR COMPOSING SATAYS**
VORRICHTUNG MIT GREIFARM ZUM ZUSAMMENSTELLEN VON SPIESSCHEN
DISPOSITIF DOTÉ D'UN BRAS DE PRÉHENSION POUR LA COMPOSITION DE SATAYS

(30) Priority: 16.03.2018 BE 201805171
(43) Date of publication of application: 20.01.2021
(73) Proprietor: SMO bv, 9900 Eeklo (BE)
(72) Inventor: MOLLET, Sander, 9991 Adegem (BE)
(74) Representative: Brantsandpatents bv
(86) International application number: PCT/IB2019/052164
(87) International publication number: WO 2019/175852

(56) References cited:
- CN-U- 207 174 956
- GB-A- 2 415 944
- US-A1- 2015 282 495
- US-B2- 7 476 150
- US-B2- 8 688 264
- TVI ENTWICKLUNG & PRODUKTION GMBH: "TVI Meat portioning", 28 June 2016 (2016-06-28), XP055526114, Retrieved from the Internet <URL:https://tvi-gmbh.de/wp-content/uploads/2016/06/TVI_ASR-300_Multipick_engl.pdf> [retrieved on 20181122]

## Description

### TECHNICAL FIELD

The present invention relates to a device and method for composing satays.

### PRIOR ART

Satay is originally an Indonesian and Malaysian dish, consisting of three or more pieces of roasted meat on a thin wooden skewer, usually made of bamboo or a woody material. The pieces of meat may be pieces of pork, beef, chicken, goat, prawns, etc.

Satay is made by sliding several pieces of meat onto a skewer of woody or metal material, possibly with a vegetable such as onion or pepper between the successive pieces of meat. The satay is then fried in a fatty or oily medium or grilled over a charcoal or wood fire grill.

In addition, satays can be made by sliding other food elements onto a skewer, such as for example fish, sweets, cheese, fruit and the like.

Composing satays may be executed manually. In view of the time-consuming character of manually composing satays, automatic or semi-automatic appliances are desirable. Such devices are already known.

GB 2,442,871 describes a holder with various compartments for positioning pieces of meat and a facility for introducing a skewer. US4429435 describes a similar device to the one described in GB 2,442,871, in which various satays can be composed in parallel. However, composing satays is still carried out manually in this embodiment.

US 5,100,366 describes a two-part cylindrical holder comprising several compartments in the longitudinal direction for fixing pieces of meat, wherein the compartments are provided with a central opening via which a skewer can be pushed through the pieces of meat. Analogously, a device is described in which such cylinders are fitted next to each other.

However, a drawback of such a device is that it is impossible to produce satays of different sizes or using different vegetables. In addition, the process is still very laborious, as the skewer has to be introduced manually. Moreover, working with such a device requires a lot of assembly work.

To this end, EP 2,048,960 B1 describes a device for composing satays, comprising a number of holders which can be stacked and which are provided with at least a cup-shaped recess with an open and an opposite bottom, which has a passage for introducing a skewer in the direction of the stacking of the holder, wherein the holders are split once the satays have been formed, so that the satays can be released. Such a machine makes it possible to fill the holder with different ingredients of different dimensions in a simple manner. In addition, skewering the food is much easier and the satays can be removed from the device in a simple manner once they have been produced. The assembly work can be limited and composing the satays is partly carried out automatically.

WO 2014/080 356 describes a device for composing a series a of satays, comprising a series of separate holders, wherein each holder is provided with a series of tub-shaped recesses, which are suitable for at least temporarily accommodating a food element, a lying frame and a standing frame, wherein the lying frame is suitable for moving the holders substantially horizontally up to the standing frame, wherein the standing frame is suitable for separately moving each holder substantially vertically upwards, wherein the holder is kept in a substantially horizontal position.

Despite the improvements which have been made regarding a device and method for composing satays, the following problems still exist.

Composing satays still requires many sequential and repetitive manual operations, as a result of which the time required to compose one satay and the associated use of manpower forms a limitation to industrial use.

In addition, the use of moving mechanical parts is an inherent threat to the operation of the device.

Furthermore, the need for frequent physical contact between the operative and the food elements when preparing satays according to the known methods forms an inherent problem with regard to hygiene and therefore has to be limited.

A further device suitable for composing a series of satays is disclosed in US 7,476,150 B2.

### BRI EF SUMMARY OF THE INVENTION

The present invention provides a solution to at least one of the above-described problems by providing an arrangement and method for composing satays, as described in claims 1 and 12.

In a first aspect, the invention relates to a device for composing a series of satays as defined in claim 1.

In a following aspect, the invention relates to a method for composing a series of satays as defined in claim 12.

The present invention is advantageous since this limits the need for manual operations, thus making the method quicker, less expensive, less labour-intensive and less cumbersome for the operative and more hygienic due to the reduced contact between the operative and the food elements.

### BRI EF DESCRIPTION OF THE DRAWl NGS

**Figure 1A** is a perspective view of a device for composing a series of satays according to the present invention.
**Figure 1B** is a front view of a device for composing a series of satays according to the present invention.
**Figure 2A** is a schematic front view of a gripping arm, comprising a clamping element and a suction element, according to the present invention.
**Figure 2B** is a schematic side view of a gripping arm, comprising a clamping element and a suction element, according to the present invention.
**Figure 2C** is a perspective view of a gripping arm, comprising a clamping element and a suction element, according to the present invention.
**Figure 2D** is a perspective view of a gripping arm, comprising a clamping element and a suction element, according to the present invention.
**Figure 3A** is a perspective view of an embodiment of a skewer holder and a skewer supply system according to the present invention.
**Figure 3B** is a schematic side view of an embodiment of a skewer holder and a skewer supply system according to the present invention.
**Figure 3C** is a schematic cross-section of an embodiment of a skewer holder and a skewer supply system according to the present invention.
**Figure 3D** is a schematic cross-section of an embodiment of a skewer holder and a skewer supply system according to the present invention.
**Figure 3E** is a schematic cross-section of an embodiment of a skewer holder and a skewer supply system suitable for a gun-shaped skewer according to the present invention.
**Figure 3F** is a schematic cross-section of an embodiment of a skewer holder and a skewer supply system suitable for a gun-shaped skewer according to the present invention.
**Figure 4A** is a cross-section of a first, upper disc of a skewer holder and a skewer supply system according to the present invention.
**Figure 4B** is a cross-section of a second, bottom disc of a skewer holder and a skewer supply system according to the present invention.
**Figure 5A** is a schematic cross-section of a preferred embodiment of a gripping arm according to the present invention.
**Figure 5B** is a schematic front view of the same preferred embodiment of the gripping arm of the present invention.
**Figure 5C** is a schematic side view of a preferred embodiment of a gripping arm according to the present invention.
**Figure 5D** is a schematic front view of the same preferred embodiment of the gripping arm of the present invention.
**Figure 6A** shows a schematic front view of an embodiment of a satay clamp in an open state.
**Figure 6B** shows a schematic front view of an embodiment of a satay clamp in a closed state.
**Figure 6C** shows a schematic top view of an embodiment of a satay clamp in an open state.
**Figure 6D** shows a schematic top view of an embodiment of a satay clamp in a closed state.
**Figure 6E** shows a schematic side view of an embodiment of a satay clamp in a closed state.
**Figure 7A** shows a schematic perspective view of an embodiment of a vibrating trough for positioning and orienting food elements on a conveyor belt.
**Figure 7B** shows a front view of an embodiment of a vibrating trough for positioning and orienting food elements on a conveyor belt.

### DETAILED DESCRIPTION

The invention relates to a device for composing a series of satays.

Unless otherwise defined, all terms used in the description of the invention, including technical and scientific terms, have the meaning as commonly understood by the skilled person in the technical field of the invention. For a better assessment of the description of the invention, the following terms are explained explicitly.

In this document, 'a' and 'the' refer to both the singular and the plural, unless the context clearly implies otherwise. For example, 'a segment' means one or more than segments.

The terms 'comprise', 'comprising', 'consist of', 'consisting of', 'provided with', 'include', 'including', 'contain', 'containing', 'encompass', 'encompassing' are synonyms and are inclusive or open terms indicating the presence of what follows and which do not exclude or prevent the presence of other components, features, elements, members, steps known from or described in the prior art.

In a first aspect, the invention relates to a device for composing a series of satays as defined in appended claim 1.

This is advantageous for making satays in a fully automatic or semi-automatic manner. This reduces labour costs. In addition, contact between people and food elements is avoided, which benefits hygiene. Finally, a gripping arm can always thread food elements centrally onto a skewer. Thus, the food elements are better attached to the skewer, since they are less likely to tear loose.

According to a preferred embodiment, the device for composing a series of satays comprises at least one food gripper that is a clamping element, suitable for temporarily clamping a food element.

The skewer holder elements hold a skewer. It is important here that at least one end of the skewer can be released. We refer to this end as the 'free skewer end'. The food elements are threaded onto the skewer at the free skewer end. Depending on the embodiment, it is possible that a skewer gripped by, for example, a clamping skewer holder element that centrally engages the skewer, has two free skewer ends. It is also possible that a skewer gripped by, for example, a clamping element along each end does not appear to have a free skewer end. If a clamp can open or shift along so that food elements can still be threaded onto the skewer, this remains the free end.

A clamping element is any gripper or clamp that is capable of clamping food elements.

The clamping element is able to clamp food elements sufficiently such that they can be threaded onto a skewer, without the gripping pressure on the food elements becoming too high. The clamping element preferably clamps meat or meat substitutes. However, the clamping element can also clamp vegetables.

According to a preferred embodiment, the device for composing a series of stays comprises at least one food gripper which is a suction element, suitable for temporarily suctioning a food element.

A suction element is a suction nozzle, which is able to cover and suction smooth surfaces. A suction element does not work on all surfaces and works best on even and smooth surfaces. The suction element is preferably used to pick up food elements with a smooth surface, such as a piece of onion. The suction element has the advantage of not requiring clamping. As a result, the vegetables cannot be compressed. This is desirable so that the food elements on the satay don't look compressed.

According to a further, preferred embodiment, the gripping arm comprises both a suction element and a clamping element.

Suction elements and clamping elements moreover have the advantage that they allow the food element to be threaded onto a skewer without reorientation of the food element, wherein e.g. the skewer can be passed through the food element between the components of the clamping element, wherein e.g. the food element can be passed through the food element and partly also into the suction element, e.g. into the suction nozzle, without the skewer being damaged.

The invention can further also comprise a scoop element, which is suitable for scooping up food elements.

According to another embodiment, the device for composing a series of satays further comprises a food sensor configured to determine the position and/or size and/or orientation of a food element, wherein the position and orientation of a food element orientates the gripping arm, and in particular the food gripper located on the gripping arm. Furthermore, a food sensor can configure the clamping of a clamping element on the basis of the size of a food element, so that the food element is not compressed and cannot be unclamped from the clamp.

According to a preferred embodiment, the clamping element is designed such that when a food element with a square cross-section is engaged, the centre of this square will always be at the same position.

This makes it possible to engage food elements with a square cross-section, in particular cubic meat elements, and to thread them centrally onto a skewer regardless of their size. The meat elements can easily be threaded centrally onto the skewer, since the centre of the cross section of the meat element is always in the same position.

According to a preferred embodiment, the device is provided with a sensor or detector for measuring the position of the free end of the skewer. In combination with a gripper or food sensor, the correct threading of food elements on the skewer is ensured independently of the position of the free end of the skewer. This is particularly advantageous if the skewer and the skewer holder can move, such as with a rotatable skewer holder. This ensures that the food elements, mainly the meat elements, are skewered centrally by the skewer. By ensuring that the food elements are centrally skewed, it is prevented that food elements still fall off the skewer as a result of poor adhesion to the skewer.

An example of a clamping element that is designed in this way is a parallel gripper, the cross-section of the clamp in the closed state being diamond-shaped, more preferably, the cross-section of the clamp in the closed state being square. Depending on the extent to which the parallel gripper is open, the area of the cross-section of the clamp adjusts, but the centre of a square in this clamp will always be at the same position when fully clamped, being the centre of the cross-section of the clamp.

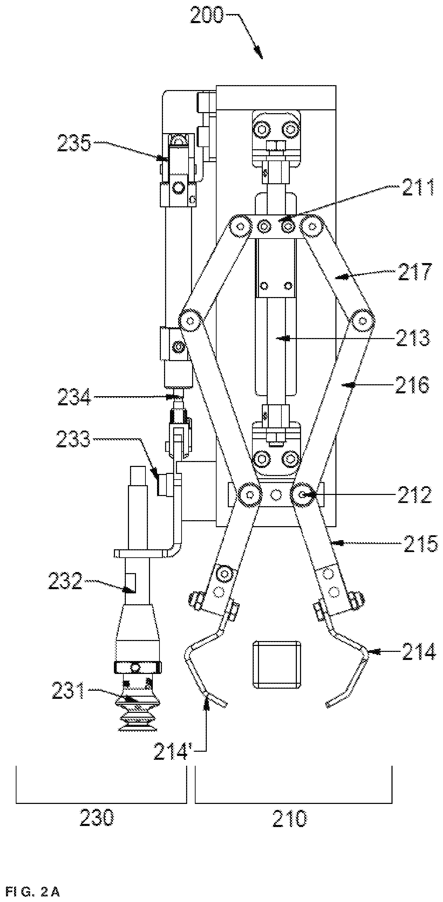

However, it is also possible and further advantageous to use an angular clamping element, the shape of which is adapted to achieve the same effect. A possible form of such an angular clamp is shown in Figure 2A.

The gripping arm is configured to position and/or orient the food gripper based on data obtained from the food sensor and/or to control the gripping pressure of the food gripper. Furthermore, the position at which the food gripper threads the food element onto the skewer is adjusted to the data obtained from the food sensor. Finally, the gripper arm can be configured to form different types of satays. For example, the food elements used, or the order of the food elements used can be adjusted. In such a situation, the food sensor can be used to distinguish and locate the various food elements. This allows the gripping arm to pick up the correct food elements. This is not trivial, especially for three or more food elements.

Preferably, this also includes the selection of the food element. Food elements are primarily selected by type. Satays are usually formed with alternating food elements, such as alternating meat, vegetables and fruit. Furthermore, food elements can also be selected for size, position, orientation and so on.

The sensor is furthermore advantageous for centrally engaging and threading food elements. This is important for nice-looking satays. Furthermore, this is important so that no food elements tear or come loose from the skewer.

Preferably the food gripper, preferably a clamping element of the food gripper, is configured to receive a food element, preferably a piece of meat or a piece of fish, along the largest dimension of the food element, so that the food element with the largest dimension can be threaded parallel to the skewer. This ensures a stable composition of the satay. Since the other dimensions of the food element can also be detected in essence, the device, preferably the gripping arm and/or the food gripper, can be configured to thread the food element onto the skewer essentially along a central axis of the food element.

Another embodiment comprises the device for composing a series of satays, wherein the food surface comprises at least one conveyor belt, which is suitable for supplying separate food elements to the gripping arm.

A conveyor belt allows a constant and simple supply of individual food elements to the gripping arm. This can be arranged so that different satays, being satays with different combinations and sequences of food elements, can be easily made. In addition, close contact with the gripping arm and the skewers can be avoided, which improves safety.

In a further preferred embodiment, the device comprises a plurality of conveyor belts, preferably running side by side, 1 per type of food element. This can for example be 2 conveyor belts, of which 1 conveyor belt for pieces of meat and 1 conveyor belt for vegetables.

This simplifies the configuration of the gripper arm. This makes it easier for the gripper arm to find the location of the food elements based on predefined rules.

Furthermore, conveyor belts which never contain certain food elements are also possible. Satays can thus be made without contact with gluten, pork, beef, game and so on.

In this way, the device can comply with local rules or guidelines from the food industry. This can improve hygiene, since contact with raw food elements rarely promotes shelf life. Furthermore, allergies can be avoided. Cultural guidelines, whereby contact with certain types of food elements must be avoided at all times, can also be met. The use of meat substitutes allows the production of vegetarian satays. However, mixing meat substitutes and meat on the same conveyor belt is not desirable for the consumer.

In a further preferred embodiment, the device comprises a vibrating trough suitable for supplying food elements to the food surface. Thus, the food surface does not have to be topped up manually.

In a particularly preferred embodiment, the device comprises at least one conveyor belt and an associated vibrating trough. Food elements can be supplied in bulk to the vibrating trough. By keeping the feed speed of the vibrating trough lower than the speed of the conveyor belt, food elements are spread over the length of the conveyor belt. This is advantageous for picking up the food elements separately.

In a further preferred embodiment, the vibrating trough has different tracks. These tracks comprise a profile of the vibrating trough, with the different food elements preferentially following a track. The position of the food elements can thus be controlled across the width of the conveyor belt. Furthermore, this is advantageous in order to optimally utilise the width of the conveyor belt.

The use of tracks with sufficient space between them, in combination with a slower feed speed of the vibrating trough relative to the transport speed of the conveyor belt, allows the food elements to be put onto the conveyor belt 'individually' or 'separately'. This is also possible with a different food surface, such as a rotatable food surface. This has the advantage that the food elements can be supplied in bulk and automatically positioned well over the surface. This is advantageous for the efficient operation of the gripping arm. This also makes it possible to provide different gripping arms along one conveyor belt, and to ensure sufficient food elements for each of these gripping arms.

In a still further preferred embodiment, the tracks have an orientation profile. The use of an appropriate orientation profile in the vibrating trough will place food elements on the food surface with a desired orientation. This is advantageous for non-symmetrical food elements, such as onion. The vibrating behaviour of a food element in the vibrating trough depends on the orientation of the food element in the vibrating trough. An appropriate orientation profile can further bring about this vibration behaviour and stimulate the desired orientation. A piece of onion can be placed on the food surface in a 'concave' or 'convex' manner. The use of a concave orientation profile will favour a concave orientation of the onion. On the other hand, a convex orientation profile will favour a convex orientation of the onion.

In a further, preferred embodiment, the tracks, with or without an orientation profile, have obstacles. These obstacles can, on the one hand, ensure that food elements only run in one track, and not between two tracks. The obstacles thus correct food elements with an incorrect position, thus ensuring the correct positioning of the food elements in the vibrating trough. On the other hand, obstacles can also be used to ensure the desired orientation of food elements. Preferably, these obstacles in combination with an orientation profile will not hinder the movement of correctly oriented food elements and will block and preferably correct the orientation of incorrectly oriented food elements.

A preferred embodiment of the device for composing a series of satays further comprises a skewer supply device, the skewer supply device comprising a skewer reservoir (i), suitable for storing skewers, a support plate (ii), suitable for supplying a single skewer to the skewer holder and a pushing element (iii), suitable for arranging the single skewer on the support plate in the skewer holder element of the skewer holder.

The skewer reservoir is suitable for holding a large number of skewers. This allows the device to work for a long time without a continuous supply of skewers. The support plate transports one skewer from the reservoir to the skewer holder. The pushing element pushes the skewer from the support plate up to the skewer holder element.

In a preferred embodiment, the bottom of the skewer reservoir is V-shaped. The support plate is narrow, with a top profile suitable for holding one skewer. The V-shape of the bottom of the skewer reservoir comprises two sloping surfaces, with the support plate in the tangent between these two surfaces. The support plate can operate between a first and a second position, so that the top profile of the tangent of the sloping surfaces lies at the skewer reservoir. The sloping surfaces in the bottom of the skewer reservoir ensure that skewers are always present on the tangent line between these surfaces. The support plate drops below the skewers, so that one skewer lies ends up in the top profile of the support plate. This skewer is lifted from the skewer reservoir by the support plate. The other skewers fall past the support plate and remain in the skewer reservoir.

In a preferred embodiment, the device for composing a series of satays comprises a skewer holder which is rotatably arranged, wherein the skewer holder elements suitable for gripping skewers are carried out radially or arranged with respect to the rotatable skewer holder.

The skewer holder elements hold skewers in a radial position. The rotatably arranged skewer holder allows the gripped skewers to be rotated. According to a preferred form, the rotatable skewer holder comprises at least one rotatable disc, which comprises the skewer holder elements. In a further, preferred embodiment, the rotatable skewer holder allows for skewers to be arranged at a fixed, first position, food elements to be arranged on these skewers at one or more fixed, second positions - whereby satays are produced - and these satays to be collected at a fixed, third position. In this way, the skewer holder grips the skewers during the production of the satays, but the skewer holder also takes care of the transport of the skewer and/or satay.

According to the invention, the device for composing a series of satays, wherein the device comprises a rotatable skewer holder, the skewer holder elements being arranged radially, further comprising a skewer supply device and a satay collector, suitable for collecting a series of satays, the rotatable skewer holder with the skewer supply device, the gripping arm, and the satay collector each being arranged radially with respect to the rotatable skewer holder.

By a good choice of the orientation of two consecutive skewer holder elements, the fixing of skewers in the first position, the production of satays in the second position, and the releasing of satays in the third position, can take place simultaneously. Here, the rotatable skewer holder can rotate continuously or, alternatively, do a small, fixed rotation. This small, fixed rotation is defined by an angle, and this angle preferably corresponds to an angle between two skewer holder elements. This ensures the presence of a skewer holder element, which possibly also holds a skewer or says, after the rotation if the previous position included a skewer holder element.

It is common for the production of satays at the first position to take considerably longer than the fixing or releasing of skewers. As a result, the system can be delayed to the pace of the slowest step. Alternatively, the second position can be subdivided into a series of positions, along which one food element is threaded onto the skewer. For this purpose, the use of several food grippers, possibly on the same gripping arm, and/or several gripping arms is desirable.

A preferred embodiment comprises the device for composing a series of satays, wherein the skewer holder elements of the skewer holder can communicate with each of the radially arranged components, being the skewer supply device, the gripping arm and the satay collector, without intermediate movement of said skewer holder.

Communication of a component with a skewer holder element means performing an action, more specifically the performance of an action by a component, such as the skewer supply device, the gripping arm and the satay collector, for which a skewer holder element is required. For example: communication of the skewer supply system with a skewer holder element means supplying the skewer holder element with a skewer via the skewer supply system.

If a skewer holder element can communicate with the skewer supply device, the gripping arm, the satay collector or other components in which the skewer and/or skewer holder and/or satay undergo an action, it is optimal that all other mentioned components - including the skewer supply device, the gripper arm, the satay collector - can also communicate simultaneously with the skewer holder and/or skewer and/or satay. This allows each of these parts to work on the skewer holder at the same time, increasing efficiency. This is simple for radial skewer holders but is certainly not limited to this embodiment. It is also advantageous for skewer holders in which the skewer holder elements do not rotate that each component along the skewer can communicate in parallel with this skewer holder.

A further preferred embodiment comprises a device for composing a series of satays, the device being supported by a support plate (i), which is provided with a series of feet (ii) suitable for supporting the device, wherein a frame (iii) is attached on the support plate, which supports at least the gripping arm.

This embodiment comprises a frame, provided with a support plate and a series of feet. In a further preferred embodiment, the feet can be adjusted in order to be able to place the device flat and stable even on uneven surfaces. This is important for proper operation and promotes safety.

Furthermore, a frame ensures a fixed position of all components that are attached to said frame. Especially for the control technique with regard to the gripping arm, the relative position of the gripping arm to the skewer holder and / or skewer holder elements and the relative position of the food surface and / or the optional food sensor are simpler if these parts are always at a fixed position and orientation relative to each other.

In a preferred embodiment, the device for composing satays is provided with a vibration damper. When threading food elements onto the skewer, these food elements may temporarily get stuck on the clamping element or suction element. When the food element comes loose from the clamping element or suction element, the skewer will then oscillate or be in an oblique position. This can disrupt the machine or at least delay it.

In a preferred embodiment, the device is provided with a skewer guide. This skewer guide acts as a vibration damper. A skewer guide will guide the skewer to a straight position and provide it with an additional support point when the clamping or suction element opens.

Even more preferably, the skewer guide is in line with the clamping element. The sticking of food elements is particularly common with (sticky) meat, more particularly with marinated meat. It is therefore more common for food elements to get stuck at the clamping element, and not the suction element.

In a preferred embodiment, the device is provided with a satay clamp. A satay clamp is a clamp that can hold a semi-composed satay while more food elements are threaded onto the skewer of this satay. This is particularly advantageous for completely filling a skewer, since a skewer guide may not have a point of engagement here.

A satay clamp is a clamp that, like the clamping element, engages a food element. The satay clamp preferably engages a meat element. The satay clamp should preferably be positioned in the position where the satay is produced. In contrast to the clamping elements of the gripping arm, the clamping heads of the satay clamp are preferably only clamped in with little gripping. This allows these clamps to be released without sticking to the food element. For this purpose, these clamping heads are preferably smooth. Even more preferably, these clamping heads are concave. These clamping heads are preferably also provided with a coating that reduces adhesion to food elements.

The satay clamp engages at least the first food element that is provided on the skewer, preferably at least the second food element that is provided on the skewer, most preferably the third food element that is provided on the skewer. This is advantageous since the distance between the two support points of the skewer increases, so that oscillations are further prevented.

In a further preferred embodiment, the device comprises both a satay clamp and a skewer guide. The skewer guide supports the skewer and prevents oscillations, possibly except for the last food elements. The satay clamp supports the skewer and prevents oscillations, except for the first food elements. The combination of both gives additional sturdiness and makes it possible to provide the skewer with at least 2 fixed support points when threading each food element. This makes the device more reliable and allows food to be threaded faster onto the same skewer.

A skewer usually has a uniform diameter and at least one conical, pointed end. We will also refer to this as a 'regular' skewer. There is, however, a trend towards the use of 'gun-shaped' skewers. This 'gun-shaped' skewer has a sharp, pointed end on one side, and a flat broadening or flag on the other side. This flag acts as a point of engagement, making it easy to hold or turn the skewer.

In a preferred embodiment, the device is capable of processing both a regular skewer and a gun-shaped skewer into a satay. It is important here that the flag of the gun shape is always placed in the skewer holder element, and preferably with a regular orientation.

In a preferred embodiment, the skewer holder is provided with skewer holder elements with on the one hand a shape suitable for a regular skewer, and on the other hand skewer holder elements suitable for inserting the flag of a gun-shaped skewer.

In a preferred embodiment, the skewer supply system is provided with an orientation lock, which orients the flag of the gun-shaped skewer in a desired position. In a further, preferred embodiment, the skewer supply system is provided with an alignment lock. This aligns the flag of the gun-shaped skewer so that it can be correctly inserted into the provided skewer holder element. In a preferred embodiment, the skewer supply system comprises a clamping system in which the gun-shaped skewer is clamped in but can rotate, so that the flag of the skewer can be reliably aligned. In a preferred embodiment, the skewer supply system comprises a detector. The detector measures if the gun-shaped skewer is always in the correct direction, so that the flag can be inserted into the skewer holder element. It is not possible to thread food elements past the flag. The detector can further measure if the flag is correctly oriented and positioned.

These preferred embodiments allow both regular and gun-shaped skewers to be easily processed into satays with the same device.

Finally, the frame can also contribute to the ability to work ergonomically for operators and the frame can also contribute to safety by providing protective elements.

According to the second aspect, the device comprises a method for composing a series of satays as defined in appended claim 12.

Threading food elements by a gripping arm - which is understood to be an automatic or semi-automatic gripping arm - is advantageous in order to reduce the number of working hours required for a satay. This reduces labour costs, which is desirable for a labour-intensive product such as satays.

Furthermore, the combination of food elements and their sequence can be chosen completely freely. The food elements can be better positioned on the skewer, which means in particular the central threading of food elements so that they cannot tear loose. Contact between a person and the food elements is also avoided.

A preferred embodiment of the method comprises picking up and transporting food elements to the free skewer end, which is performed by a gripping arm with a food gripper.

Here, not only is the threading of food elements onto the skewer carried out by an automatic or semi-automatic gripping arm, but also the picking up and transport of said food elements. Since there are often different food elements, which are supplied on the food surface, the correct food elements must still be transported sequentially to the skewer. The gripping arm can easily carry out the picking up, transport and the threading of the elements onto a skewer into a satay in series. Picking up food elements is understood to mean in the first place the gripping of food elements.

According to a preferred embodiment of the method, the series of satays are produced sequentially.

The sequential production of satays means that the series of satays are produced individually, one by one. The gripping arm produces 1 satay by threading food elements onto a skewer. until it is a finished satay, after which the following satay is produced.

The sequential production of satays allows them to be produced in any quantity, whether or not predetermined. Furthermore, the satays can also be chosen differently in terms of structure. For example, the order of the food elements when threading satays with two, three or more food elements can be adjusted as desired. This is often not possible with satay machines that produce large numbers of satays simultaneously. As a result, a larger variety of products is possible without the production process having to be significantly delayed and/or adjusted.

Method for composing a series of satays according to any of claims 11-12, wherein the food elements are skewered sequentially onto the skewer.

For example, the order of the food elements when threading satays with two, three or more food elements can be adjusted as desired. This is often not possible with satay machines that produce large numbers of satays simultaneously. As a result, a larger variety of products is possible without the production process having to be significantly delayed and/or adjusted.

According to the invention the method comprises the steps of:
(i) providing food elements;
(ii) providing a skewer with at least one free skewer end in a skewer holder element, the skewer holder elements being arranged radially with respect to a rotatable skewer holder;
(iii)rotating the rotatable skewer holder;
(iv)picking up a food element and transporting the food element to the free skewer end, and
(v) threading the picked-up food element onto the skewer via the free skewer end by means of a gripping arm with a food gripper.

In this way, skewers can be supplied in bulk without being supplied manually or by the gripping arm. Furthermore, this allows the satays to be easily removed again. Thanks to the rotatable skewer, in which skewers are always provided, the gripping arm will be able to work without breaks. The gripping arm can pick up food elements from the food surface and transport them simultaneously during the rotation of the rotatable skewer holder.

In a preferred embodiment, the device is provided with a detector for measuring the position of the sharp, pointed end of the skewer. The method then comprises measuring the sharp end of the skewer, so that the threading of food elements is corrected so that food elements are threaded correctly and centrally, preferably through their geometric or mass centre point onto the skewer.

In another preferred embodiment, food elements are provided on the food surface in a predetermined position. In another preferred embodiment, food elements are provided on the food surface in a predetermined orientation.

Preferably, the food surface is a conveyor belt. Even more preferably, food elements are supplied to this conveyor belt with the aid of a vibrating trough. Preferably, the feed speed of the vibrating trough is lower than the transport speed of the conveyor belt. This ensures a distance, in length, between the food elements on the conveyor belt. Even more preferably, the vibrating trough is further provided with tracks, so the position in the width can also be adjusted. Thus, food elements are positioned 'individually' on the conveyor belt. This is advantageous since the gripping arm always wants to pick up a single food element.

Preferable, the vibrating trough for asymmetrical food elements is provided with an orientation profile, and optionally further provided with orientation obstacles. The provision of food elements then comprises automatically positioning and orienting the food elements in order to optimise the picking up, transport and threading of the food elements.

In what follows, the invention will be described by way of non-limiting examples illustrating the invention, and which are not intended to and should not be interpreted as limiting the scope of the invention.

### EXAMPLE

### EXAMPLE 1: Device for composing satays

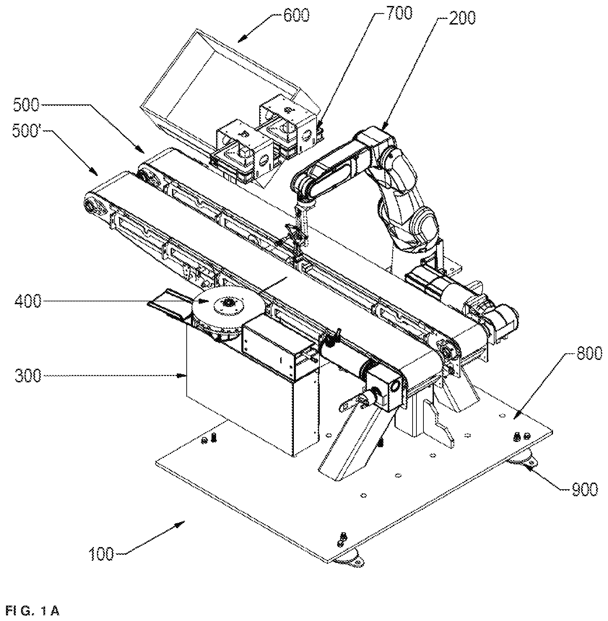

Figure 1A is a perspective view of a satay machine 100 in an embodiment according to the present invention. The present embodiment of the satay machine comprises the following components: two conveyor belts 500, 500', a gripping arm 200, a rotating skewer holder 400, and a skewer supply device 300 and a food reservoir 600.

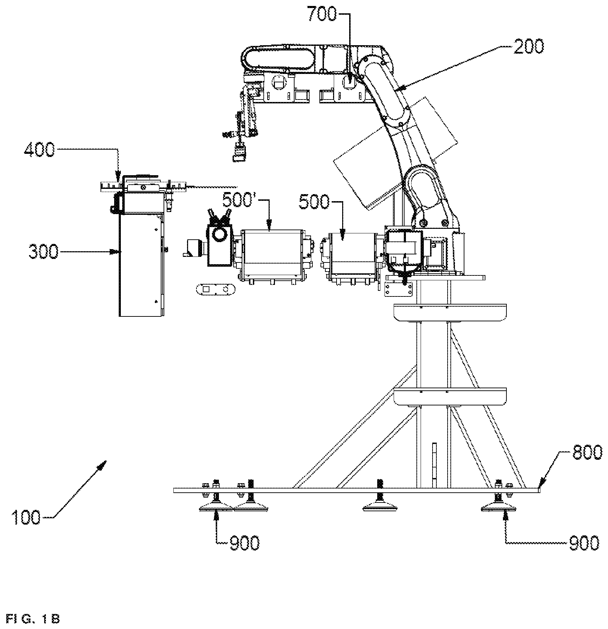

Figure 1B is a schematic side view of a satay machine 100 in an embodiment of the present invention. The satay machine 100 according to the present embodiment is supported on a support plate 800 provided with a series of feet 900. These feet can be individually adjusted to length, so that the satay machine can always be fixed flat and stable. The gripping arm, conveyor belts, skewer holder and skewer supply device are fixed on the support plate with the aid of a reinforced support arm under the gripping arm.

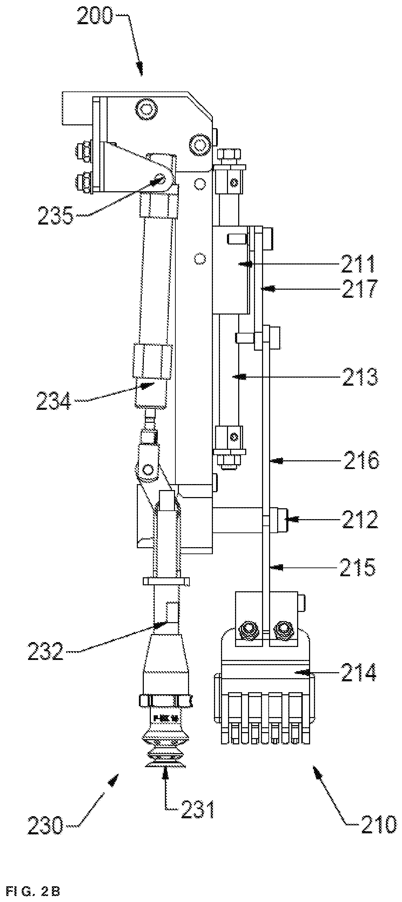

Figure 2A is a schematic front view of an embodiment of the gripping arm according to the present invention. Figure 2B is a schematic side view of the same embodiment of the gripping arm according to the present invention. The gripping arm 200 comprises a clamping element 210 and a suction element 230.

The clamping element 210 is suitable for clamping a food element, preferably a piece of meat. The clamping element is provided with two clamps 214, 214'. These are formed for clamping a piece of meat. Each clamp is fixed on a first leg 215. The first leg can rotate around a pivot point 212, but is fixedly fixed with a second leg 216, so that the first leg 215 and second leg 216 cannot pivot relative to each other. The second leg 216 is hingedly connected to a third leg 217. The third leg 217 is hingedly fixed with the clamp actuator 211. This actuator is attached to a guiding rod 213. The position of the actuator along the guide rod determines the extent to which the clamps open or close. The closing of the clamps can vary gradually, the clamping and gripping pressure being adapted to the food element being clamped. Closing the clamps 214, 214' means that these clamps simultaneously move relatively closer to each other.

The suction element 230 is suitable for attaching and moving a food element, preferably a piece of vegetable or fruit, even more preferably with a smooth surface. The suction element 230 consists of a suction element 231 mounted on a fourth leg 232. The suction element can attach to smooth surfaces by creating a local vacuum between the suction element 231 and the surface. In this way an object with a smooth surface is held by the suction element. The fourth leg 232 can pivot about pivot point 233. The fourth leg can gradually rotate between fully extended, the suction element coming to lie next to the clamping element, and crossed, the angle between the suction element and the arm being approximately 90°. This rotation is controlled by actuator 234, which can extend and thereby determine the rotation at pivot point 233.

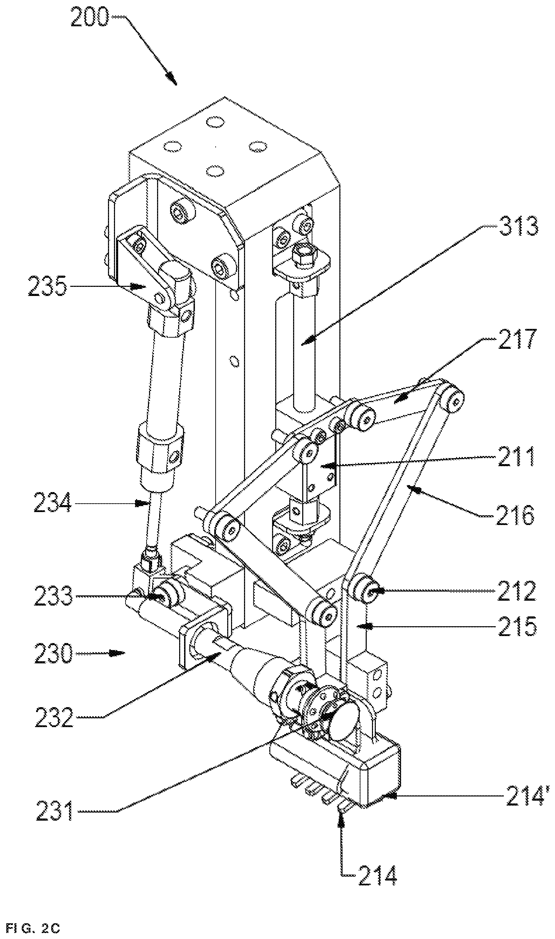

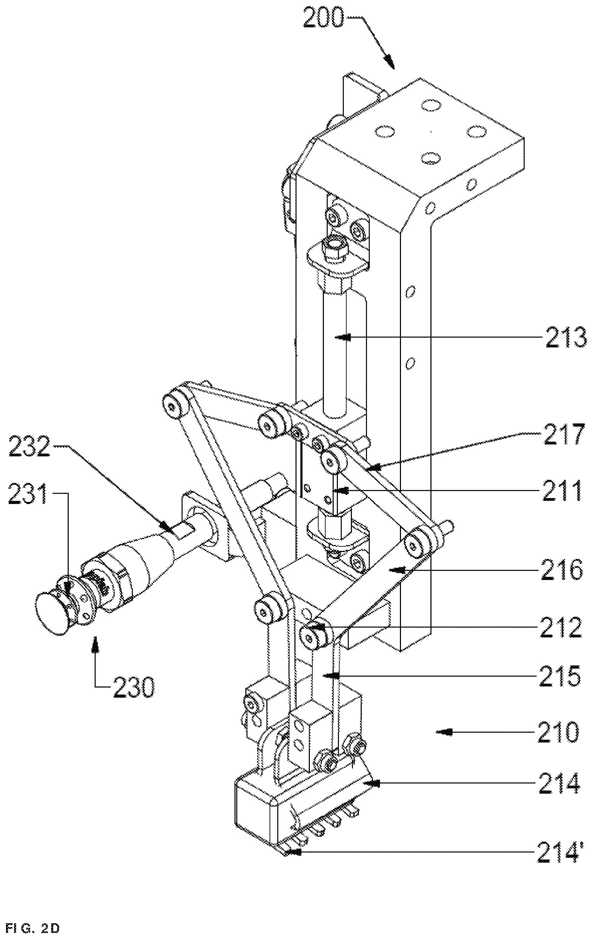

Figure 2C and Figure 2D show a left front view and a right front view of the gripping arm 2. The clamping element in these figures clamps a food element. The clamping actuator 211 is here in a lower, relative position than figures 2A and 2B. This makes the clamps relatively more closed. The closing of the clamps is controlled with the aid of the clamp actuator 211.

The suction element 230 is in the horizontal position. This position is achieved by extending the piston 234, whereby the fourth leg 232 rotates around the pivot point 233. The fourth leg 232 can extend telescopically, the extension being biased relative to the extended position by means of a spring. When suctioning a food element where the spring force is exceeded, the fourth leg will shorten temporarily. Thus, the suction element 230 can suction a food element with the fourth leg in a vertical position, after which the suction element rotates about 90° to a horizontal position. The food element is then skewered horizontally onto the skewer. The suction element then releases the food element, so that it remains on the skewer.

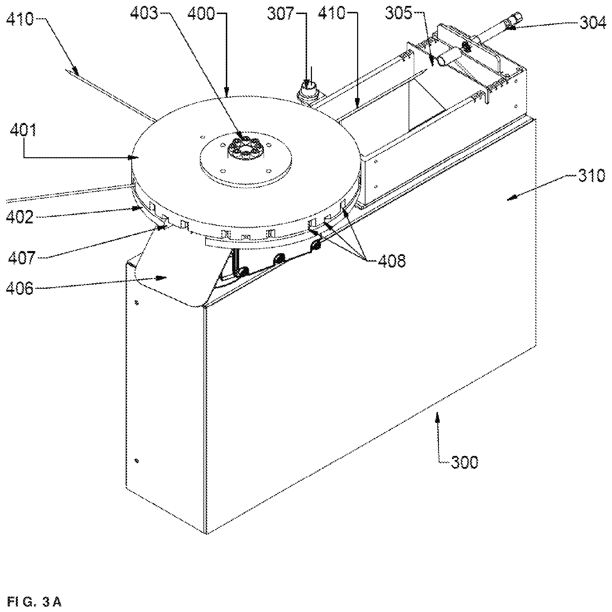

Figure 3A shows a perspective view of a rotating skewer holder 400 and a skewer supply device 300 according to the present invention.

The skewer holder 400 consists of two discs. An upper, rotating disc 401 which is provided with radial notches 408 along the bottom, suitable for holding one skewer 410 per notch and a second, fixed disc 402. The rotating disc is fixed on a rotating shaft 403. The lower, fixed disc is provided with a recess 407, along which an inclined discharge surface 406 runs. A notch containing a skewer that rotates along this notch, the skewer falls out of the notch on the discharge surface. When operating, this skewer will be provided with food elements, and the finished satays can be collected with the aid of a collection tray under the discharge surface.

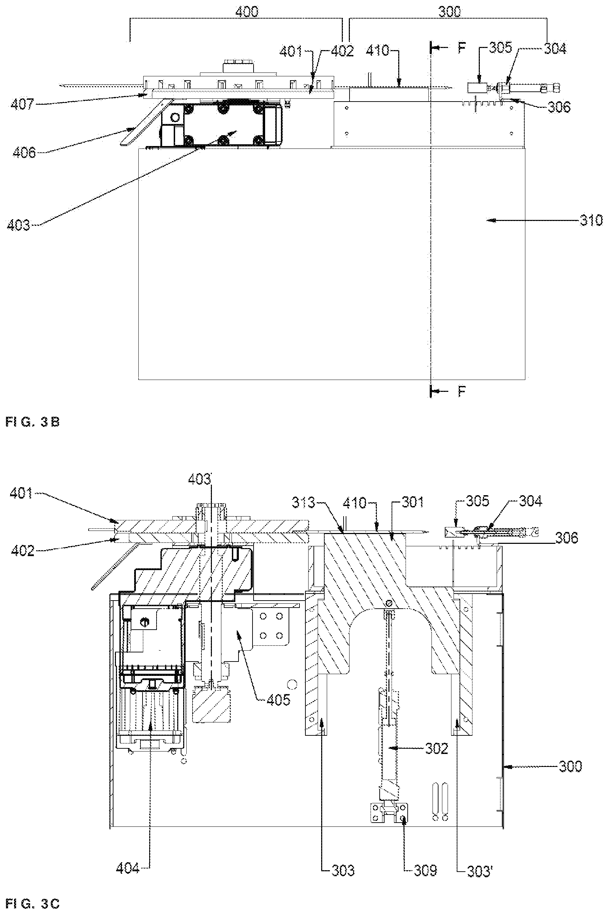

Figure 3B shows a schematic side view of a rotating skewer holder 400 and a skewer supply device 300 according to the present invention. Figure 3C shows a cross-section of a rotating skewer holder 400 and a skewer supply device 300 according to the present invention.

The skewer supply device 300 consists of a support plate 301 which is connected to two tracks 303, 303', which allow the support plate to move in one dimension. The movement of the support plate is determined by a piston. The skewer supply device 300, together with the skewer holder 4, is partially integrated into a housing 310. The piston 302 is fixed to this housing with a first attachment element 309 and attached to the support plate with a second attachment element 308.

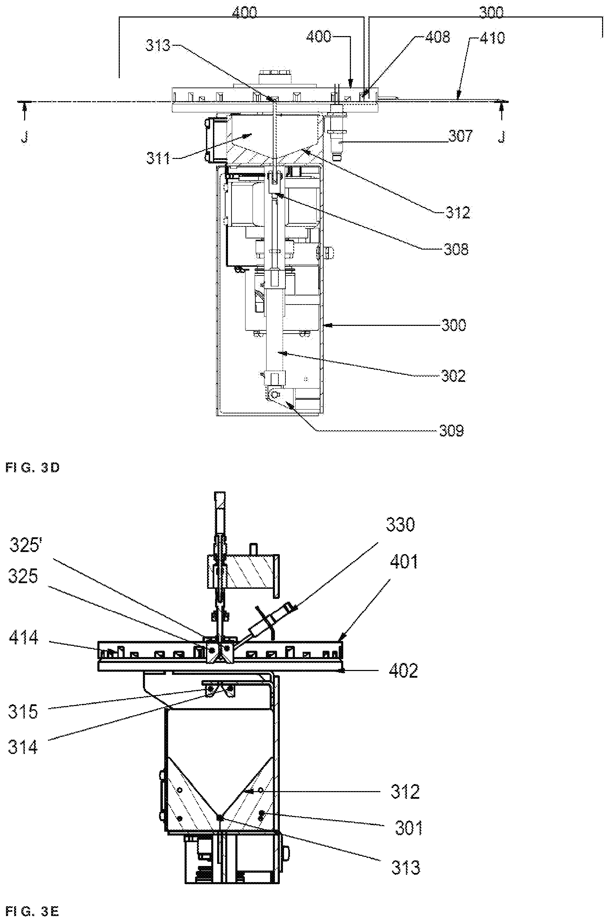

Figure 3D shows a schematic front view of a skewer supply device 300 according to an embodiment of the present invention. The support plate has two positions: a first, lower position and a second, upper position. The second, upper position is shown in Figure 3C and 3D. In the first, lower position, the support plate is provided with one skewer from a skewer reservoir 311. The upper surface of the support plate is V-shaped, such that exactly one skewer 313 fits into this V-shape. The underside of the skewer reservoir is also V-shaped, with the support plate in the first, lower position coming below the tip of the V-shape 312. Thus, when operating, the skewer reservoir will provide the support plate with one or more skewers when it is in the first, lower position. When the support plate rises to the second, upper position, only one skewer will be grabbed due to the dimensions and design of the support plate. The other skewers will return to the skewer reservoir.

From the second, upper position of the support plate, the skewer is fixed on the skewer holder 4 by means of the notches 408, which are arranged radially on the underside of the upper, rotating disc 401 of the skewer holder. The skewer is pushed into these holes along the support plate with the aid of an extendable pushing element 304. This element is attached to the housing with an attachment element 306. The pushing element can telescopically extend, causing the pushing head 305 to push the skewer 410 along the support plate into the notch 408. There, the skewer will stay stuck in the notch.

Furthermore, the skewer supply device is provided with a detector 307. This detector monitors if the support plate is provided with a skewer, if not the support plate is sent back to the first, lower position.

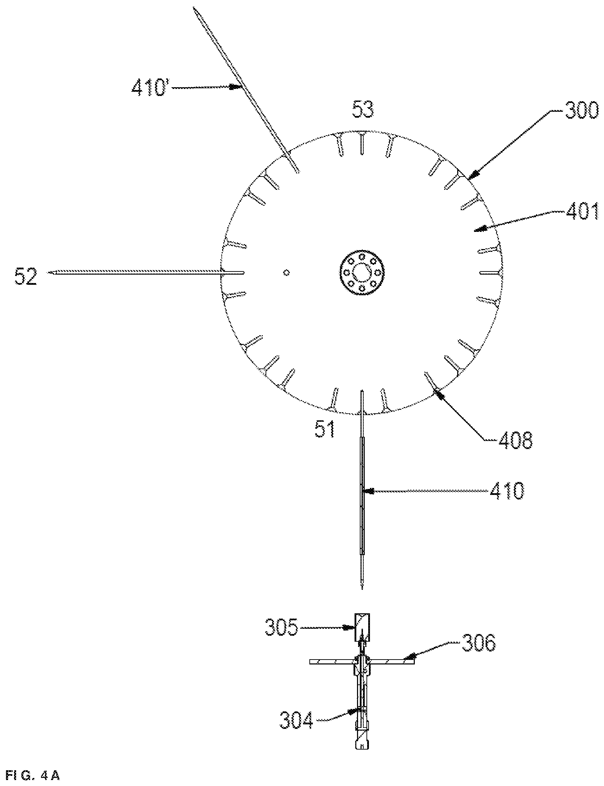

Figure 4A shows a schematic top section of a rotating skewer holder 400 and a skewer supply device 300 according to the present invention. This shows the upper, rotatable disc 401 provided with notches 408, grouped in threes. Furthermore, the pushing element 304, fixed with attachment element 306 and provided with pushing head 305, is shown.

According to the a preferred embodiment the upper, rotatable disc 401 comprises eight sets of three notches. The upper, rotatable disc rotates counterclockwise as seen from above. When operating, there are three important positions for the skewers loaded in the upper, rotatable disc. The first important position is 51, where a skewer is loaded into the upper, rotatable disc. The second important position is 52. Here the skewer is provided with food elements by the gripping arm 200. This is how a satay is made. The third important position is 53, where the recess in the lower disc is located. Here the finished satays are released from the upper, rotatable disc and collected. According to the present preferred embodiment, there is an angle of 90° between 51 and 52. There is also an angle of 90° between 51 and 52. It is important to choose the angle so that at the same time a skewer can be loaded into 51 and the skewer can be provided with food elements in 52. The waiting time for rotating the upper disc is thus reduced.

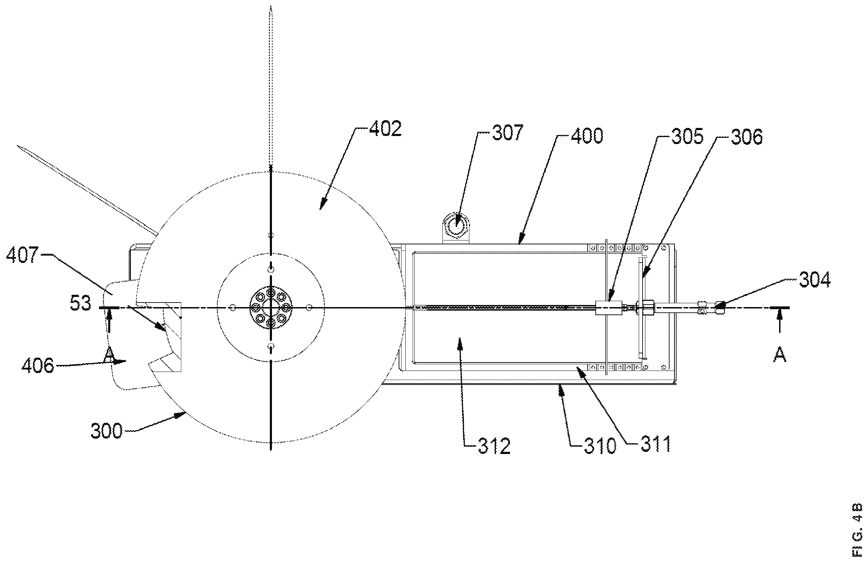

Figure 4B shows a schematic top section of a rotating skewer holder 400 and a skewer supply device 300 according the present invention. This shows the lower, fixed disc 402, provided with a recess 407 in S3. The device is provided with a discharge surface 407 below this recess. The housing 310 is completely sealed, which promotes safety. This is in view of the number of mechanically moving and rotating elements such as the central shaft 403 and the piston 302. However, the half-open skewer reservoir 311 is located on top of the housing. The detector 307 is fixed along the side of the housing, in the present embodiment the side of the conveyor belt 500.

The food sensor 700, as shown in Figure 1A and Figure 1B, is configured to determine the position, orientation, size, and area of food elements on the conveyor belts 500 and 500'. Once these parameters have been determined, the position of the food elements is monitored. The gripping arm can thus always be positioned to pick up a food element. Furthermore, the clamping at the clamping element can be controlled on the basis of the orientation, so that the food elements are threaded lengthwise on the skewer. The central threading of the food elements onto the skewer, so that these food elements do not come loose from the skewer, is also important and is achieved by the configuration of the gripping arm, in particular the clamping element and suction element, based on the parameters measured by food sensor 700 and the operating parameters of the device 100.

An important advantage of the device according to this preferred form is the production of satays with alternating food elements, wherein at least one food element can be clamped and at least one food element can be picked up by the suction element. For the production of this type of satays, for example satay with alternating onion and meat, production can be accelerated by always clamping one food element and sucking one food element before threading both elements onto the skewer. As a result, the number of movements of the gripping arm required to produce one skewer is considerably reduced.

### EXAMPLE 2: Device for composing satays provided with a vibration damper.

The second example comprises a device for composing satays 410 according to the first example, wherein the device is furthermore provided with vibration dampers comprising a skewer guide 250 and a satay clamp 420. When applying food elements to a satay with a device according to example 1, it is possible that, when the suction and/or clamping element is released, the skewer sticks to the gripper. This gives rise to an oscillating movement of the skewer. This oscillating movement makes it impossible to measure the position of the skewer for threading the next food element. Furthermore, the skewer will still oscillate when threading the next food element. This is particularly problematic with marinated, sticky meat. This can stick to the clamping element when the clamp opens. The provision of suitable vibration dampers helps remedy this problem.

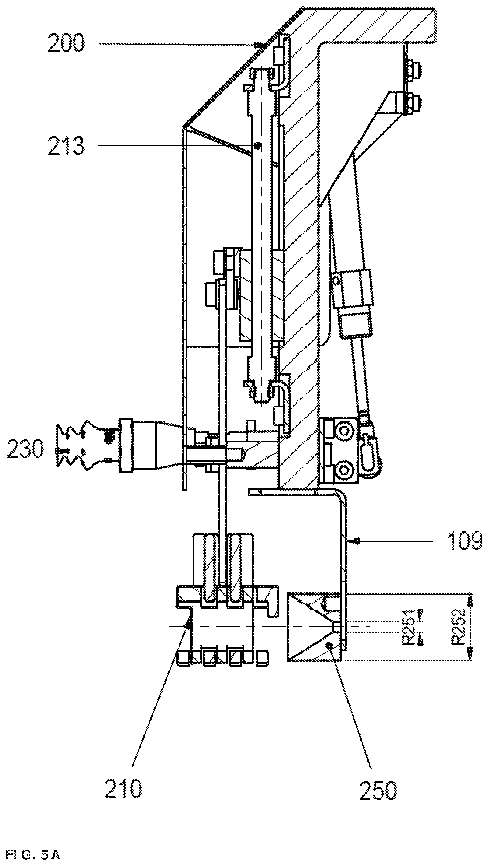

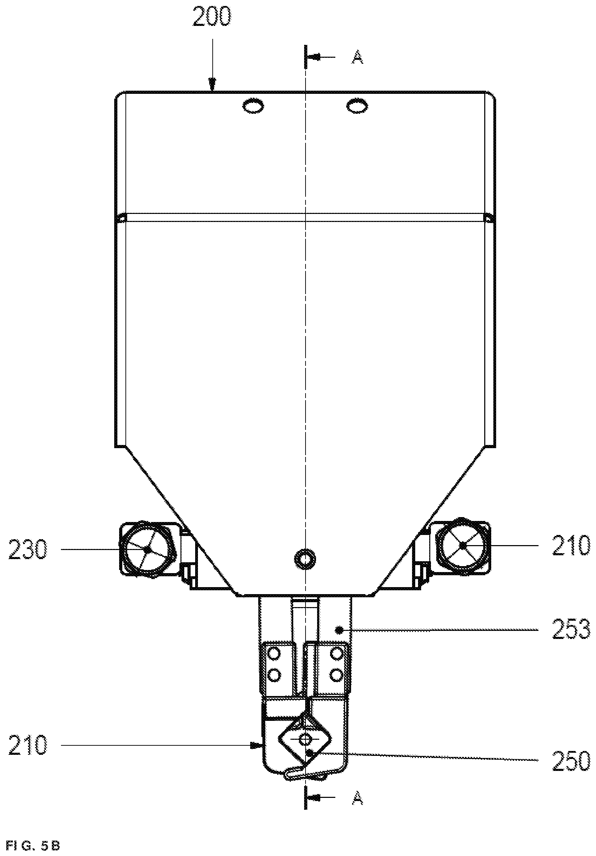

Figure 5A is a schematic cross-section of a preferred embodiment of a gripping arm according to the present invention. Figure 5B is a schematic front view of the same preferred embodiment of the gripping arm of the present invention. The gripping arm 200 comprises a clamping element 210, a suction element 230 and a skewer guide 250, wherein the clamping element is in a closed state.

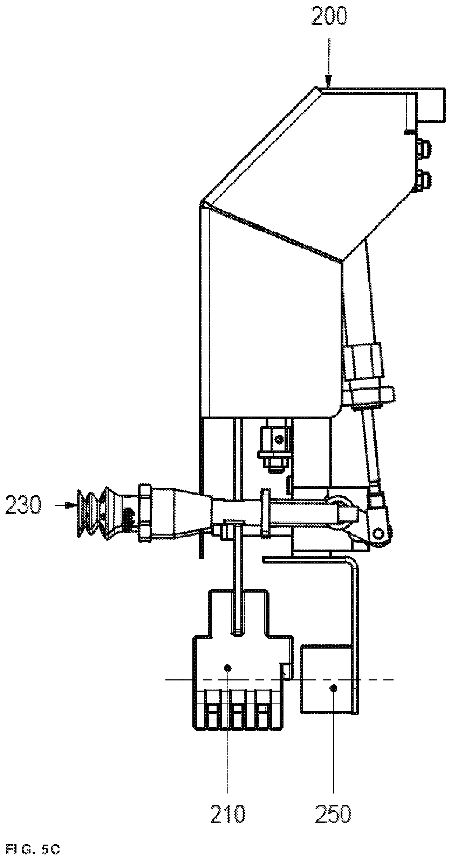

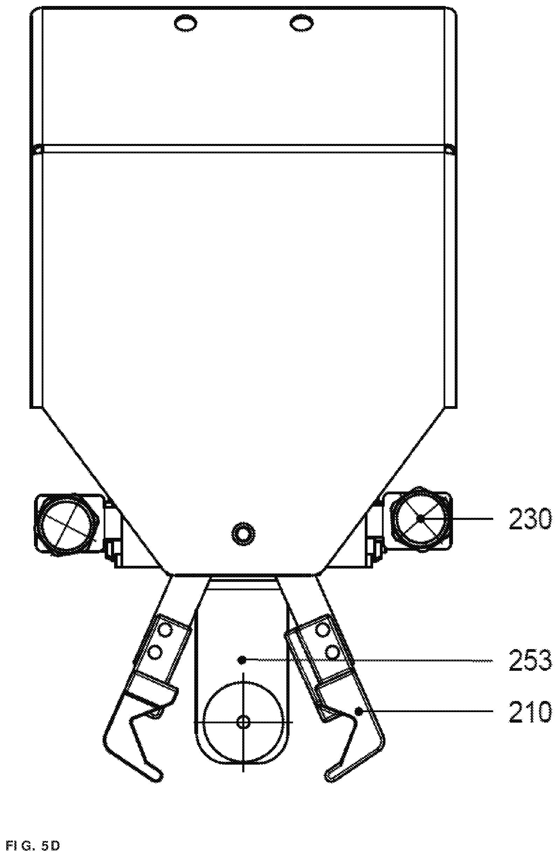

Figure 5C is a schematic side view of a preferred embodiment of a gripping arm according to the present invention. Figure 5D is a schematic front view of the same preferred embodiment of the gripping arm of the present invention. The gripping arm 200 comprises a clamping element 210, a suction element 230 and a skewer guide 250, wherein the clamping element is in an open state.

The gripping arm 200, in line with clamping element 210, is provided with a skewer guide 250. The skewer guide has a conical bore 257, the bore having a large aperture 256 with large radius 252 along the side of the clamping element 210. The conical bore 257 has, on the other side, a small aperture 255 and with a small radius 251 which opens onto a uniform, small bore 255. The axis of the conical bore 257 extends in line with the clamping element 210 and in line with the radial notches 408 of the skewer holder 400. This ensures that a food element is threaded centrally in the clamping element. With a closed clamping element, the skewer then has three support points: the radial notch 408 of the skewer holder 400, the closed clamping element 410 via a food element, and the small aperture 255 of the skewer guide 250. Also, when opening clamping element 210, the skewer has two support points, whereby oscillations are greatly reduced.

When a meat element is threaded onto the skewer, the skewer will be received in the conical bore 257 and guided to the small aperture 255. The skewer is then in a fixed position. When the clamping element then opens, as shown in Figures 5C and 5D, the skewer will remain in this fixed and straight position. The clamping element 210 in open position and the skewer guide 250 are then withdrawn from the skewer together. This skewer guide 250 is mounted on the frame of the gripping arm 254 with connecting element 253.

Skewer guide 250 dampens oscillations of the skewer when threading the skewer with food elements, except for the last food elements that are threaded onto the skewer. When thread the last food elements, when the skewer is completely filled to the end of the skewer, the skewer guide 250 does not touch the skewer. Furthermore, the weight of the food element and the lever relative to radial notch 408 reinforces the oscillations in this position. Thereby, the skewer can be detached from the radial notch 408, or food elements can be detached from the skewer. In order to also avoid these oscillations, the device is preferably provided with a satay clamp 420. The satay clamp 420 is suitable for holding the satay from at least one food element being threaded onto the skewer.

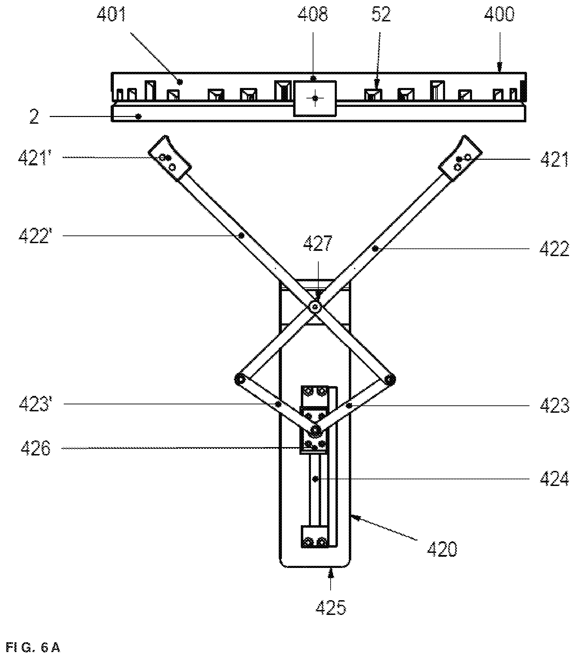

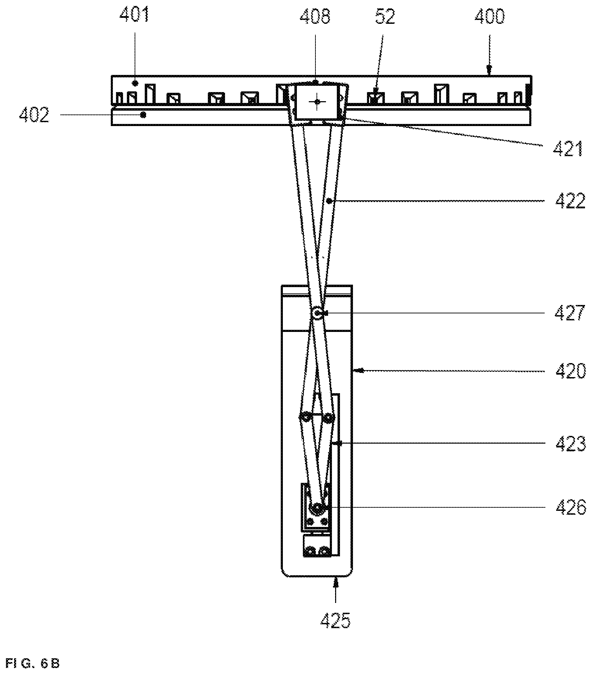

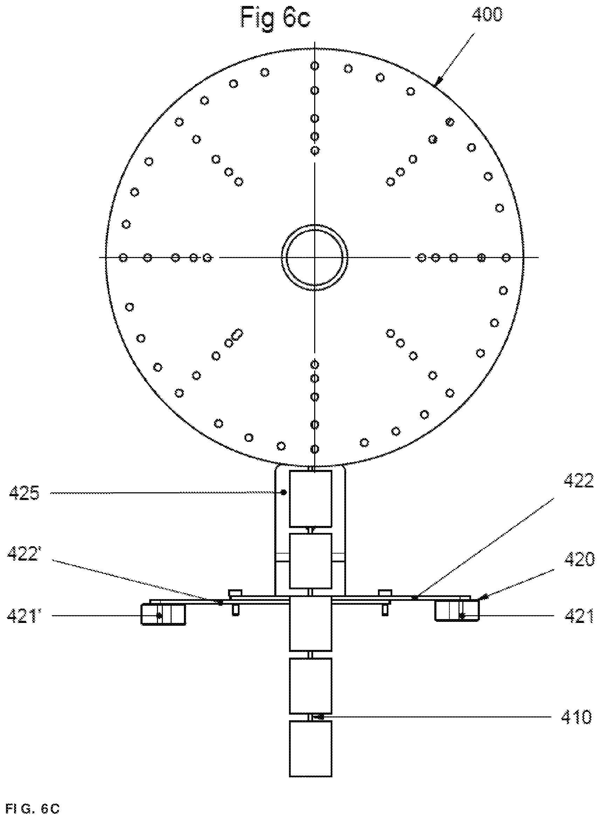

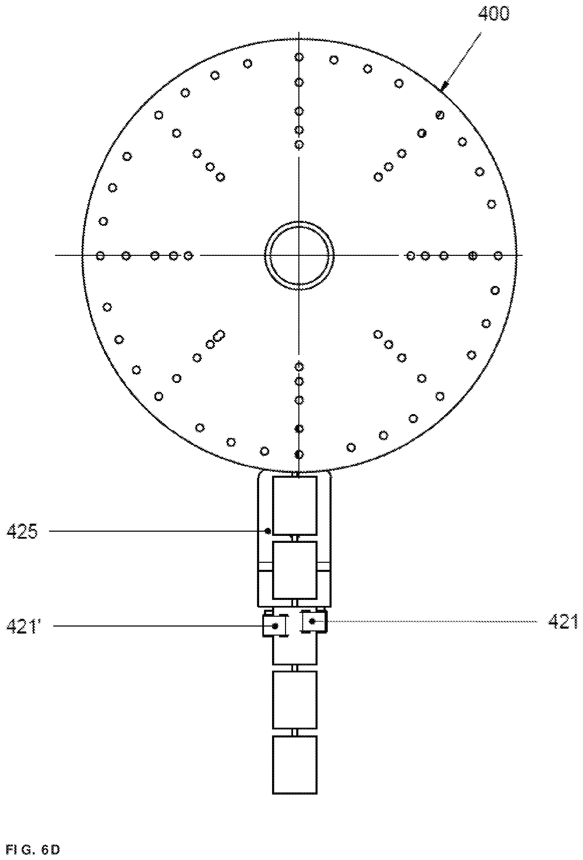

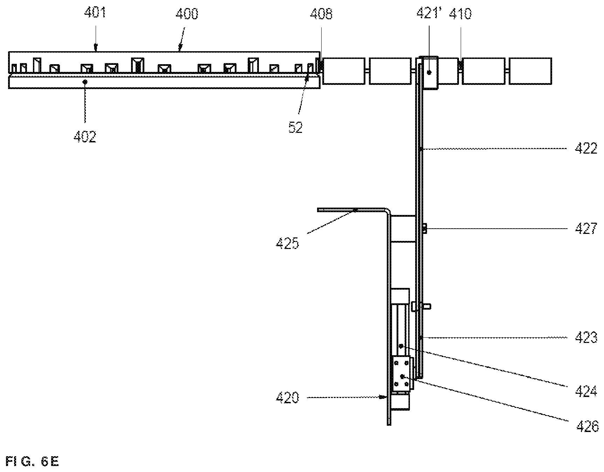

Figure 6A shows a schematic front view of an embodiment of a satay clamp in an open state. Figure 6B shows a schematic front view of an embodiment of a satay clamp in a closed state. Figure 6C shows a schematic top view of an embodiment of a satay clamp in an open state. Figure 6D shows a schematic top view of an embodiment of a satay clamp in a closed state. Figure 6E shows a schematic side view of an embodiment of a satay clamp in a closed state.

Satay clamp 420 is provided with a frame 425 that can be attached to the skewer holder 400. A guiding rod 424 is provided on the frame, on which an actuator 426 is provided. Two short legs 423, 423' are arranged in a hinged manner on this actuator, which are also hingedly connected to two long legs 422, 422'. The two long legs 422, 422' are each connected to pivot point 427. Thus, the short legs 423, 423' and the long legs 422, 422' work together like scissors that can be opened and closed by the actuator 426. At the free end of long legs 422, 422', clamping heads 421, 421' are provided. These clamping heads are suitable for hygienically clamping the food elements. These clamping heads can preferably be easily exchanged. Exchanging the clamping heads makes it easier to clean these clamps, as well as using different clamping heads for different applications. For example, it is desirable not to use the same clamping heads for both meat elements and for meat substitutes.

The satay clamp 420 is suitable for holding the satay from at least one food element being threaded onto the skewer. Preferably from at least two or three food elements threaded onto the skewer. This depends on the distance between the skewer holder 400 and the satay clamp 420. This distance is fixed when using a fixed frame 425. The satay clamp 420 can close as soon as a food element is provided on the skewer 410 between the clamping heads. The satay clamp must not be opened when threading further food elements. The satay clamp is provided along the skewer holder 400 in position 52, being the position in which the skewer with food elements is provided. The satay clamp dampens the oscillations of the skewer/satay when providing food elements, except for the first food elements.

### EXAMPLE 3: Device for composing satays with feeding vibrating trough.

The third example comprises a device for composing satays 410 according to the first or second example, the device further comprising a vibrating trough for supplying meat elements to the food surfaces 500 and 500'.

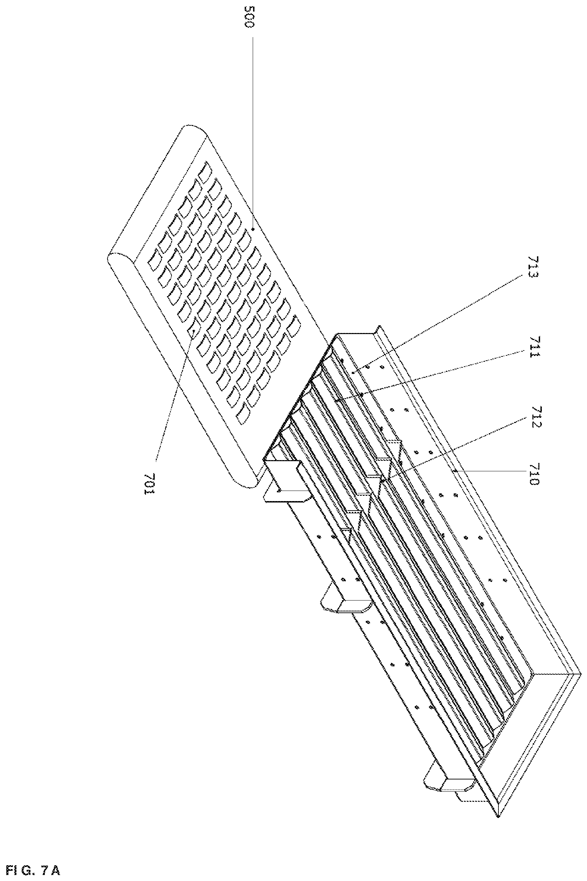

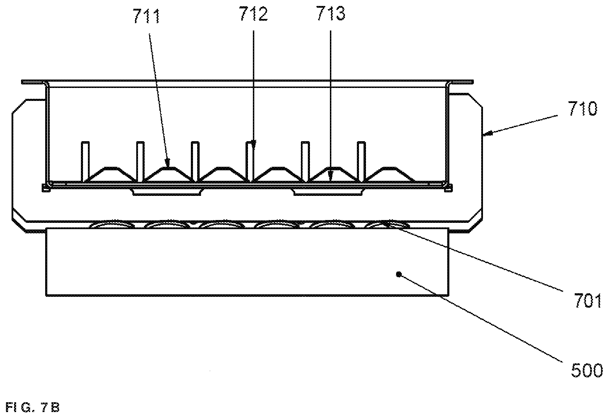

The vibrating trough 710 for feeding, positioning and orienting food elements, in this case onion 701, to conveyor belt 500 is shown in Figure 7A. A front view of the conveyor belt 500 and the vibrating trough 710 is shown in Figure 7B.

Vibrating trough 710 is provided with an orientation screen 713, consisting of tracks provided with an orientation profile 711 and orientation obstacles 712. Onion in a round, concave orientation will be on the concave orientation track and here move further to the free end, where the onion is deposited on the conveyor belt 500. Onion in a hollow, convex orientation in the vibrating trough, will move up to the orientation obstacles 712, and there the orientation obstacle will correct the orientation to the round position. Thus, rows of round oriented onion are provided at the end of the vibrating trough, which are transferred to the conveyor belt.

Preferably, the conveyor belt 500 has a transport speed faster than the feed speed of the vibrating trough 710. Due to the combination of the tracks and this difference in speed, space and width are always left on the conveyor belt between all food elements. The food elements are individualised, which is advantageous for a sensor for measuring them correctly and for a gripping arm for easily picking them up.

The feeding vibrating trough makes it possible to supply a large number of food elements in bulk, and to provide them well positioned and oriented on the gripping arm.

Conveyor belt 500' is provided with a similar vibrating trough, suitable for meat elements. This vibrating trough is not drawn. However, these meat elements are more or less square in cross-section, so that orientation is of less importance. This vibrating trough only has tracks and obstacles that spread the meat elements in rows on the conveyor belt. This makes it easier to clamp the meat elements. The tracks for positioning food elements without a preferred orientation can be carried out in many different forms, such as a wavy profile, a concave profile, a convex profile such as, for example, a succession of semi-circular tracks, a triangular or sawtooth profile, and so on.

A further advantage of this arrangement is the optimum utilisation of the food surface of the conveyor belt, without food elements falling next to the conveyor belt.

### EXAMPLE 4: Device for composing satays suitable for a 'gun-shaped' skewer.

The fourth example comprises a device for composing satays 410 according to the first, second or third example, wherein the device is further adapted for use with regular and gun-shaped skewers.

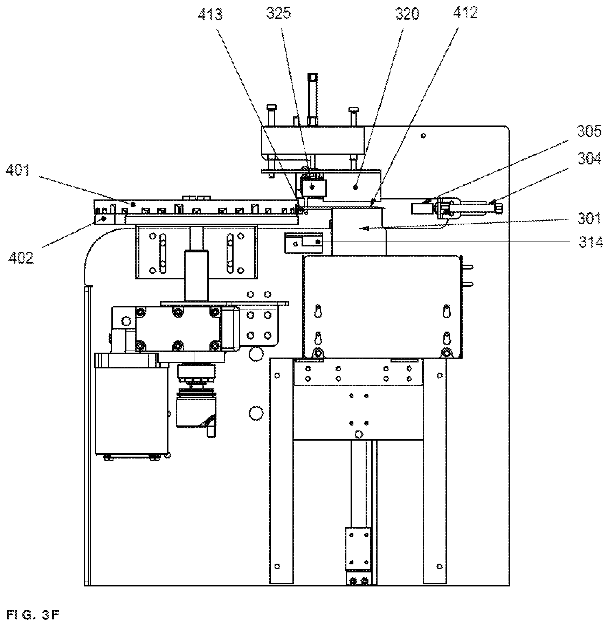

For this purpose, an adapted skewer supply system is used that can also orient these gun-shaped skewers correctly. Figures 3E and 3F show a skewer holder and a skewer supply system suitable for a gun-shaped skewer. The skewer supply system has been adjusted in comparison with the previous examples.

The gun-shaped skewer 410 is a skewer with one sharp, pointed end for threading food elements and a flat broadening or flag 413. This flag is advantageous for gripping and turning the skewer. The flag of the skewer must hereby enter the larger skewer elements 414, with the widening of the flag in a fixed orientation so that the sharp end of the skewer is always at the same location. Skewer elements 414 in the upper rotatable disc 401 are sufficiently high to receive these flags.

The skewer supply system works according to the same principle, whereby the skewer is raised by support plate 301. In addition, however, an orientation lock 314 is provided, which orientates the flag of the skewer parallel with this support plate. Sensor 330 then measures if the gun-shaped skewer lies on the support plate in the right direction, with the flag facing the rotatable skewer holder. Furthermore, more the sensor if the flag is pointing downwards, and not upwards. This ensures a specific, constant height of the sharp end of the skewer. If the detector detects a misaligned or incorrectly oriented skewer, or if there is no skewer on the support plate, the support plate will immediately get a new skewer.

If a skewer lies on the support plate in the correct direction and with the flag down, clamping plate 320 will move downwards. The end of both the support plate and the clamping plate are semi-circular, so that the skewer cannot fall from the support plate but can rotate.

Alignment lock 325 and 325' consisting of two parallel lock parts then moves downwards. These parallel plates will perfectly align the flag with the elongated skewer holder element 414, so that the skewer can be provided by pushing element 304 provided with pushing head 305 in the skewer holder element.

This arrangement can also handle regular skewers provided that both elongated skewer holder elements 414 and smaller, regular notches 408 are used. The entire device can thus process both regular skewers and gun-shaped skewers into satays.

## Claims

1. Device for composing a series of satays (100), being a series of food elements pierced by a skewer (410, 412), comprising:
a. a food surface (500, 500') for supporting food elements;
b. at least one skewer holder (400), the skewer holder being provided with at least one skewer holder element (408, 414) suitable for temporarily gripping a skewer; and
c. a gripping arm (200) with at least one food gripper (210, 230), configured to pick up food elements from the food surface with the food gripper and to thread them onto a skewer in the skewer holder element;
**characterised in that** the device comprises a rotatable skewer holder (400), the skewer holder elements (408, 414) being arranged radially with respect to the rotatable skewer holder, further comprising a skewer supply device (300) and a satay collector suitable for collecting a series of satays, wherein the rotatable skewer holder (400) with the skewer supply device (300), the gripping arm (200), and the satay collector are each arranged radially with respect to the rotatable skewer holder.

2. Device for composing a series of satays (100) according to claim 1, the device further comprising:
a. a vibrating trough (710) suitable for supplying food elements to the food surface (500, 500').

3. Device for composing a series of satays (100) according to claim 2, wherein the vibrating trough (710) comprises a series of tracks, which tracks are suitable for individually positioning of food elements (701) on the food surface (500, 500').

4. Device for composing a series of satays (100) according to claim 3, wherein the tracks have an orientation profile (711) suitable for orienting food elements (701) on the food surface (500, 500').

5. Device for composing a series of satays (100) according to any of the preceding claims 3-4, wherein the vibrating trough (710) is provided with obstacles (712) suitable for positioning or orienting the food elements (701) in the vibrating trough.

6. Device for composing a series of satays (100) according to any of the preceding claims 1-5, wherein the skewer holder (400) is rotatably arranged, wherein the skewer holder elements (408, 414) suitable for gripping skewers are carried out radially or arranged with respect to the rotatable skewer holder.

7. Device for composing a series of satays (100) according to the preceding claim 1, wherein at least one food gripper is a clamping element, suitable for temporarily clamping a food element.

8. Device for composing a series of satays (100) according to the preceding claim 7, wherein the clamping element (210) is designed such that when a cubic food element is engaged, the centre of this food element is always at the same place.

9. Device for composing a series of satays (100) according to any of the preceding claims 1-3, wherein the device further comprises a food sensor (700), suitable for determining the position and orientation of a food element, wherein the gripping arm (200), in particular the food gripper (210, 230), is configured based on the position and/or orientation of a food element when picked up.

10. Device for assembling a series of satays (100), according to any of the preceding claims 1-4, wherein the food surface comprises at least one conveyor belt (500, 501), which is suitable for supplying a series of individual food elements to the gripping arm.

11. Device for composing a series of satays (100) according to any of the preceding claims 1-5, wherein the device further comprises a skewer supply device (300), the skewer supply device having a skewer reservoir (311), suitable for storing skewers, a support plate (301), suitable for supplying a single skewer to the skewer holder and a pushing element (304), suitable for arranging the single skewer on the support plate in the skewer holder element (408, 414) of the skewer holder (400).

12. Method for composing a series of satays, comprising the following steps:
(i) providing food elements;
(ii) providing a skewer with at least one free skewer end in a skewer holder element (408, 414), the skewer holder elements being arranged radially with respect to a rotatable skewer holder (400);
(iii)rotating the rotatable skewer holder (400);
(iv)picking up a food element and transporting the food element to the free skewer end, and
(v) threading the picked-up food element onto the skewer via the free skewer end by means of a gripping arm (200) with a food gripper (210, 230).

13. Method for composing a series of satays according to preceding claim 12, wherein step (i) comprises providing food elements on at least one conveyor belt (500, 500'), the food elements being positioned on the conveyor belt and/or oriented by at least one vibrating trough (710).

## Patentansprüche

1. Vorrichtung zum Bilden einer Reihe von Satays (100), die eine Reihe von mit einem Spieß (410, 412) durchstochenen Speisenelementen ist, Folgendes umfassend:
a. eine Speisenoberfläche (500, 500') zum Tragen von Speisenelementen,
b. mindestens einen Spießhalter (400), wobei der Spießhalter mit mindestens einem Spießhalterelement (408, 414) versehen ist, das zum zeitweisen Ergreifen eines Spießes geeignet ist, und
c. einen Greifarm (200) mit mindestens einem Speisengreifer (210, 230), dafür gestaltet, mit dem Speisengreifer Speisenelemente von der Speisenoberfläche aufzunehmen und sie auf den Spieß in dem Spießhalterelement aufzustecken,
**dadurch gekennzeichnet, dass** die Vorrichtung einen drehbaren Spießhalter (400) umfasst, die Spießhalterelemente (408, 414) in Bezug auf den drehbaren Spießhalter radial angeordnet sind, ferner eine Spießzufuhrvorrichtung (300) und einen Satay-Sammler umfassend, der dazu geeignet ist, eine Reihe von Satays zu sammeln, wobei der drehbare Spießhalter (400) mit der Spießzufuhrvorrichtung (300), der Greifarm (200) und der Satay-Sammler in Bezug auf den drehbaren Spießhalter jeweils radial angeordnet sind.

2. Vorrichtung zum Bilden einer Reihe von Satays (100) nach Anspruch 1, wobei die Vorrichtung ferner Folgendes umfasst:
a. eine vibrierende Wanne (710), die zum Zuführen von Speisenelementen zu der Speisenoberfläche (500, 500') geeignet ist.

3. Vorrichtung zum Bilden einer Reihe von Satays (100) nach Anspruch 2, wobei die vibrierende Wanne (710) eine Reihe von Bahnen umfasst, wobei die Bahnen geeignet sind, Speisenelemente (701) einzeln auf der Speisenoberfläche (500, 500') zu positionieren.

4. Vorrichtung zum Bilden einer Reihe von Satays (100) nach Anspruch 3, wobei die Bahnen ein Ausrichtungsprofil (711) aufweisen, das zum Ausrichten von Speisenelementen (701) auf der Speisenoberfläche (500, 500') geeignet ist.

5. Vorrichtung zum Bilden einer Reihe von Satays (100) nach einem der vorhergehenden Ansprüche 3 bis 4, wobei die vibrierende Wanne (710) mit Hemmnissen (712) versehen ist, die zum Positionieren oder Ausrichten der Speisenelemente (701) in der vibrierenden Wanne geeignet sind.

6. Vorrichtung zum Bilden einer Reihe von Satays (100) nach einem der vorhergehenden Ansprüche 1 bis 5, wobei der Spießhalter (400) drehbar angeordnet ist, wobei die Spießhalterelemente (408, 414), die zum Ergreifen von Spießen geeignet sind, radial ausgeführt oder in Bezug auf den drehbaren Spießhalter angeordnet sind.

7. Vorrichtung zum Bilden einer Reihe von Satays (100) nach dem vorhergehenden Anspruch 1, wobei mindestens ein Speisengreifer ein Klemmelement ist, das zum zeitweisen Einklemmen eines Speisenelements geeignet ist.

8. Vorrichtung zum Bilden einer Reihe von Satays (100) nach dem vorhergehenden Anspruch 7, wobei das Klemmelement (210) derart gestaltet ist, dass, wenn ein würfelförmiges Speisenelement in Eingriff genommen wird, sich die Mitte dieses Speisenelements stets an der gleichen Stelle befindet.

9. Vorrichtung zum Bilden einer Reihe von Satays (100) nach einem der vorhergehenden Ansprüche 1 bis 3, wobei die Vorrichtung ferner einen Speisensensor (700) umfasst, der zum Bestimmen der Position und Ausrichtung eines Speisenelements geeignet ist, wobei der Greifarm (200), insbesondere der Speisengreifer (210, 230), auf der Grundlage der Position und/oder Ausrichtung eines Speisenelements, wenn dieses aufgenommen wird, konfiguriert ist.

10. Vorrichtung zum Bilden einer Reihe von Satays (100) nach einem der vorhergehenden Ansprüche 1 bis 4, wobei die Speisenoberfläche mindestens ein Förderband (500, 501) umfasst, das zum Zuführen einer Gruppe einzelner Speisenelemente zu dem Greifarm geeignet ist.

11. Vorrichtung zum Bilden einer Reihe von Satays (100) nach einem der vorhergehenden Ansprüche 1 bis 5, wobei die Vorrichtung ferner eine Spießzufuhrvorrichtung (300) umfasst, wobei die Spießzufuhrvorrichtung einen Spießbehälter (311) aufweist, der zum Aufbewahren von Spießen geeignet ist, eine Trageplatte (301), die zum Zuführen eines einzelnen Spießes zu dem Spießhalter geeignet ist, und ein Schiebeelement (304), das zum Anordnen des einzelnen Spießes auf der Trageplatte in dem Spießhalterelement (408, 414) des Spießhalters (400) geeignet ist.

12. Verfahren zum Bilden einer Reihe von Satays, die folgenden Schritte umfassend:
(i) Bereitstellen von Speisenelementen,
(ii) Bereitstellen eines Spießes mit mindestens einem freien Spießende in einem Spießhalterelement (408, 414), wobei die Spießhalterelemente in Bezug auf einen drehbaren Spießhalter (400) radial angeordnet sind,
(iii) Drehen des drehbaren Spießhalters (400),
(iv) Aufnehmen eines Speisenelements und Transportieren des Speisenelements zu dem freien Spießende und
(v) Aufstecken des aufgenommenen Speisenelements auf dem Spie0ß über das freie Spießende mittels eines Greifarms (200) mit einem Speisengreifer (210, 230).

13. Verfahren zum Bilden einer Reihe von Satays nach dem vorhergehenden Anspruch 12, wobei Schritt (i) das Bereitstellen von Speisenelementen auf mindestens einem Förderband (500, 500') umfasst, wobei die Speisenelemente durch mindestens eine vibrierende Wanne (710) auf dem Förderband positioniert und/oder ausgerichtet werden.

## Revendications

1. Dispositif permettant de composer une série de satés (100), c'est-à-dire une série d'éléments alimentaires percés par une brochette (410, 412), comprenant :
a. une surface alimentaire (500, 500') destinée à supporter des éléments alimentaires ;
b. au moins un support de brochettes (400), le support de brochettes étant pourvu d'au moins un élément de support de brochettes (408, 414) adapté pour saisir temporairement une brochette ; et
c. un bras de préhension (200) doté d'au moins une pince à aliments (210, 230), configuré pour saisir des éléments alimentaires sur la surface alimentaire à l'aide de la pince à aliments et pour les enfiler sur une brochette dans l'élément de support de brochettes ;
**caractérisé en ce que** le dispositif comprend un support de brochettes rotatif (400), les éléments de support de brochettes (408, 414) étant disposés radialement par rapport au support de brochettes rotatif, comprenant en outre un dispositif d'approvisionnement en brochettes (300) et un collecteur de satés adapté pour collecter une série de satés, dans lequel le support de brochettes rotatif (400) avec le dispositif d'approvisionnement en brochettes (300), le bras de préhension (200) et le collecteur de satés sont chacun disposés radialement par rapport au support de brochettes rotatif.

2. Dispositif permettant de composer une série de satés (100) selon la revendication 1, le dispositif comprenant en outre :
a. une auge vibrante (710) apte à fournir des éléments alimentaires à la surface alimentaire (500, 500').

3. Dispositif permettant de composer d'une série de satés (100) selon la revendication 2, dans lequel l'auge vibrante (710) comprend une série de pistes, lesquelles pistes sont adaptées pour positionner individuellement des éléments alimentaires (701) sur la surface alimentaire (500, 500').

4. Dispositif permettant de composer une série de satés (100) selon la revendication 3, dans lequel les pistes présentent un profil d'orientation (711) adapté pour orienter des éléments alimentaires (701) sur la surface alimentaire (500, 500').

5. Dispositif permettant de composer une série de satés (100) selon l'une quelconque des revendications précédentes 3 et 4, dans lequel l'auge vibrante (710) est pourvue d'obstacles (712) adaptés pour positionner ou orienter les éléments alimentaires (701) dans l'auge vibrante.

6. Dispositif permettant de composer une série de satés (100) selon l'une quelconque des revendications précédentes 1 à 5, dans lequel le support de brochettes (400) est disposé de manière rotative, dans lequel les éléments de support de brochettes (408, 414) aptes à saisir des brochettes sont disposés radialement ou disposés par rapport au support de brochettes rotatif.

7. Dispositif permettant de composer une série de satés (100) selon la revendication précédente 1, dans lequel au moins une pince à aliments est un élément de serrage, apte à serrer temporairement un élément alimentaire.

8. Dispositif permettant de composer une série de satés (100) selon la revendication 7 précédente, dans lequel l'élément de serrage (210) est conçu de telle sorte que lorsqu'un élément alimentaire cubique est engagé, le centre de cet élément alimentaire se trouve toujours au même endroit.

9. Dispositif permettant de composer une série de satés (100) selon l'une quelconque des revendications précédentes 1 et 3, dans lequel le dispositif comprend en outre un capteur d'aliments (700), apte à déterminer la position et l'orientation d'un élément alimentaire, dans lequel le bras de préhension (200), en particulier la pince à aliments (210, 230), est configuré sur la base de la position et/ou de l'orientation d'un élément alimentaire lorsqu'il est saisi.

10. Dispositif permettant d'assembler une série de satés (100), selon l'une des revendications précédentes 1 à 4, dans lequel la surface alimentaire comprend au moins une bande transporteuse (500, 501), apte à fournir une série d'éléments alimentaires individuels au bras de préhension.

11. Dispositif permettant de composer une série de satés (100) selon l'une quelconque des revendications précédentes 1 à 5, dans lequel le dispositif comprend en outre un dispositif d'approvisionnement en brochettes (300), le dispositif d'approvisionnement en brochettes possédant un réservoir de brochettes (311), adapté pour stocker des brochettes, une plaque de support (301), adapté pour fournir une seule brochette au support de brochettes et un élément de poussée (304), adapté pour arranger la brochette unique sur la plaque de support dans l'élément de support de brochettes (408, 414) du support de brochettes (400).

12. Procédé de composition d'une série de satés, comprenant les étapes suivantes :
(i) la fourniture d'éléments alimentaires ;
(ii) la fourniture d'une brochette avec au moins une extrémité de brochette libre dans un élément de support de brochette (408, 414), les éléments de support de brochette étant disposés radialement par rapport à un support de brochette rotatif (400) ;
(iii)la mise en rotation du support de brochettes rotatif (400) ;
(iv)la saisie d'un élément alimentaire et le transport de l'élément alimentaire vers l'extrémité libre de la brochette, et
(v) l'enfilage de l'élément alimentaire saisi sur la brochette par l'extrémité libre de la brochette au moyen d'un bras de préhension (200) doté d'une pince à aliments (210, 230).

13. Procédé de composition d'une série de satés selon la revendication précédente 12, dans lequel l'étape (i) comprend la fourniture d'éléments alimentaires sur au moins une bande transporteuse (500, 500'), les éléments alimentaires étant positionnés sur la bande transporteuse et/ou orientés par au moins une auge vibrante (710).
